# EUROPEAN PATENT APPLICATION

(11) **EP 3 139 247 A1**
(43) Date of publication of application: **08.03.2017**
(21) Application number: 15183654.1
(22) Date of filing: 03.09.2015
(51) Int. Cl.: G06F 3/01, G05B 19/418

(54) **METHOD OF AND SYSTEM FOR PERFORMING BUYOFF OPERATIONS IN A COMPUTER-MANAGED PRODUCTION FACILITY**

(71) Applicant: Siemens Aktiengesellschaft, 80333 München (DE)
(72) Inventor: SASSETTI, Andrea, 16132 Genova (IT)
(74) Representative: Maier, Daniel Oliver

(57) **Abstract**

The invention provides a method of and a system for performing buyoff in a computer-managed production facility (1), comprising:
- providing a natural user interface associated with a management system of the facility and arranged at least to providing a natural user interface (4) connected with a management system (2) of the facility (1) and arranged at least to track movements of operators' bodies at workplaces of the facility (1) and to process data of said movements to recognize specific gestures indicating different states of a manufacturing task;
- detecting (11), through the natural user interface (4), the presence of operators in said workplaces;
- identifying an operator entrusted with the buyoff operation for a task through a first predefined gesture performed by said operator, and allotting said operator the natural user control (12);
- at the end of the task (13), communication (14) to the interface, by the operator having the control, of the successful completion or the failure of the task, through a second and respectively a third predefined gesture.

## Description

The invention relates to the control of manufacturing processes, especially in a production facility employing a computer-managed manufacturing execution system (MES), and more particularly it concerns a method of and a system for performing buyoff operations in such a facility.

In manufacturing systems where high quality standards must be adhered to, an electronic validation by the operators of the completion of manual manufacturing tasks has been introduced. This electronic validation is known in the art as "buyoff". In practice, the buyoff is an electronic substitute for the physical stamps applied to paper travelling through the factory, and thus facilitates the elimination of paper documents in manufacturing, while at the same time providing at least the same level of recording or warranting of the manufacturing activities performed.

Buyoff is currently performed by using an ad hoc hardware/ software (clicker) or by providing the confirmation via mouse or keyboard on a computer graphic interface at a workstation. To perform buyoff, the operator has to stop its activity, resulting in relatively high downtimes of the production line, especially when a manufacturing activity entails a high number of operations.

It is therefore an aim of the present invention to overcome the above drawbacks.

The aforementioned aim is achieved by a method and a system for performing buyoff operations in a computer-managed production facility, comprising:
- providing a natural user interface connected with a management system of the facility and arranged at least to track movements of operators at workplaces of the facility and to process data of said movements to recognize specific gestures indicating different states of a manufacturing task;
- detecting, through the natural user interface, the presence of operators in said workplaces;
- identifying an operator entrusted with the buyoff operation for a task through a first predefined gesture performed by said operator, and allotting said operator the natural user interface control;
- at the end of the task, communication to the natural user interface, by the operator having the control, the successful completion or the failure of the task, through a second and respectively a third predefined gesture.

In invention embodiments, there is provided a natural user interface having a plurality of units each associated with a workplace and, at each workplace, a single operator at a time is allotted the control of the associated natural user interface unit.

In invention embodiments, each gesture has a predetermined minimum duration.

In invention embodiments, the detection step includes assigning an identification code to each detected operator and repeating the code assignment when an operator leaves the tracking area and reenters it.

In invention embodiments, the operator having the control loses it when leaving the tracking area and is to repeat the first gesture for resuming the control when reentering the tracking area.

In invention embodiments, the operator having the control is provided with a visual feedback of the processing results.

In invention embodiments, the production facility is employing a MES system.

The invention will now be described in preferred but not exclusive embodiments with reference to the accompanying drawings, wherein:
- Figure 1 is a schematic diagram of a production line employing the invention;
- Figure 2 is a flow chart of the method of the invention;
- Figure 3 is a 3D rendering of a workplace in an exemplary application of the invention to a car assembly line; and
- Figures 4 to 6 show the feedback provided by the NUI to the operator in a car assembly line for different steps of the method.

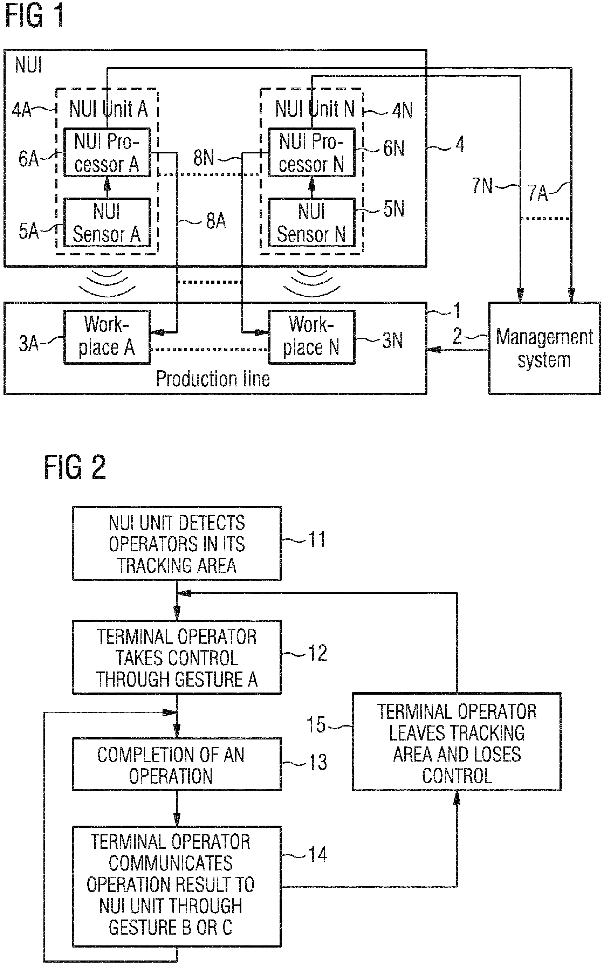

Referring to Fig. 1, there is schematically shown a production line 1 of a production facility, in particular a facility employing a computer-managed manufacturing execution system (MES), with its control or management system 2. A number of workplaces 3A...3N are arranged along production line 1 and are each attended by operators who perform certain manual manufacturing tasks or operations. Some operators (in particular, in the exemplary embodiment disclosed here, one operator per workplace) are also entrusted with the electronic validation of the completion of each task, i.e. with buyoff.

According to the invention, buyoff is performed by using the natural user interface (NUI) technology. As known, a natural user interface is a system for human-computer interaction that the user operates through intuitive actions related to natural, everyday human behavior.

Thus, the invention comprises a NUI system 4 connected to management system 2 and arranged to interact with operators at workplaces 3A...3N. More particularly, NUI 4 is of a kind relying on the human body, able to track the operator's body movements and to recognize the state of the operation through a series of precise gestures performed by the operator. Specific parts of the human body are used as reference points (hands, shoulders, wrist etc.).

A NUI of this kind is the one manufactured and marketed by Microsoft under the name "Kinect for Windows" (in short Kinect), and the following description will refer by way of example to the use of this NUI.

NUI system 4 based on Kinect includes a number of units 4A...4N, each associated with a workplace 3A...3N. Each unit 4A...4N comprises a sensor 5A...5N (Kinect for Windows v2) and a processing device 6A...6N with a processing software (Kinect for Windows SDK 2.0) arranged to processing the raw data from sensors 5A...5N. Devices 6A...6N are connected with management system 2 (lines 7A...7N), to which they communicate the processing results.

As far as body tracking is concerned, each sensor 5A...5N is capable of seeing the bodies of a plurality of operators, e.g. up to 6, in a tracking area corresponding to the associated workplace 3A...3N, and of actually tracking the movements of one of them (the operator entrusted with buyoff), as it will be described below. Such an operator will be referred to hereinafter as "terminal operator". The terminal operator at a workplace 3X (X = A...N) can also receive from the respective Kinect unit 4X a feedback of the processing results (lines 8A...8N).

The method of the invention will now be disclosed with reference to Fig. 2.

The first step 11 is the detection, by a NUI unit, of the bodies (i.e. the operators) in its tracking area, i.e. in the associated workplace. As a result of the detection, the unit assigns each body being detected an identification code. A new identification code will be assigned whenever a body leaves the tracking area and re-enters it.

At this point, the operator entrusted with buyoff for that workplace can perform a first gesture A (step 12), for instance raising one arm, to take the control of the unit and be identified by the unit as the terminal operator. This action is required since only one operator at a time is to act as terminal operator for each workplace, and allows eliminating possible interferences from other operators in the same workplace.

At the completion of an operation (step 13), the terminal operator will communicate the operation result (step 14) by performing a gesture B (e.g., raising the other arm) in case of successful completion, or a gesture C (e.g., raising both arms simultaneously) in case of failure.

The result of the operation is also communicated by the Kinect unit to management system 2.

For security reasons, each gesture must have a predetermined minimum duration (e.g. approximately 4 seconds), to make sure that involuntary movements of the terminal operator or movements of other operators in the same workplace are not taken into consideration by the Kinect unit.

If for any reason the terminal operator leaves the tracking area of the sensor, he/she loses the control (step 15) and must perform again gesture A to resume the control.

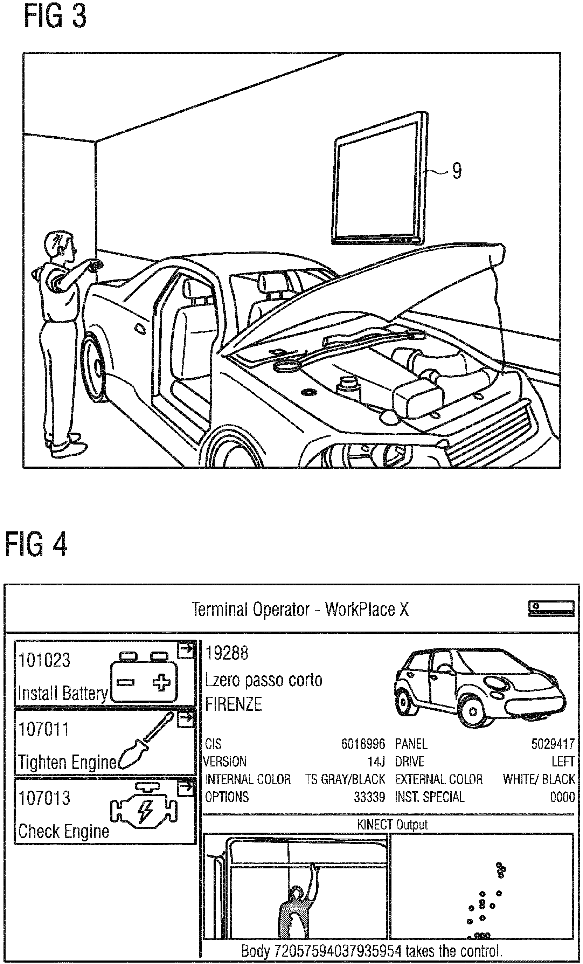

Fig. 3 shows the rendering of a workplace in a car assembly line, with a screen 9 providing the terminal operator with a visual feedback of the processing by the Kinect unit. Visualization may be optional and be enabled depending on the system configuration.

Figs. 4 to 6 show a possible visual feedback on screen 9 at a generic workplace 3X for a sequence of three operations: installing the battery, tightening the engine and checking the engine. In the example illustrated, such a feedback shows:
- the output from the Kinect unit (lower portion of the Figures), in particular the body image taken by a camera of the sensor 5X and the representation of the skeleton as a set of points;
- the operation sequence (left portion of the Figures), in the form of squares: each square containing, for each operation, the identification number, the name and a schematic sketch, as well as a box at the upper right corner indicating whether the operation has yet to be performed or the result of the operation:
- the data of the car being assembled (upper right portion of the Figures.
On top of the images, the workplace concerned is also indicated.

In Fig. 4, the Kinect output shows the operator having raised the left arm, gesture A, to take the control. The legend below the Kinect output reports the identification code of that operator and the taking of the control. The arrows in the boxes of all operation squares indicate that the operations are still to be performed.

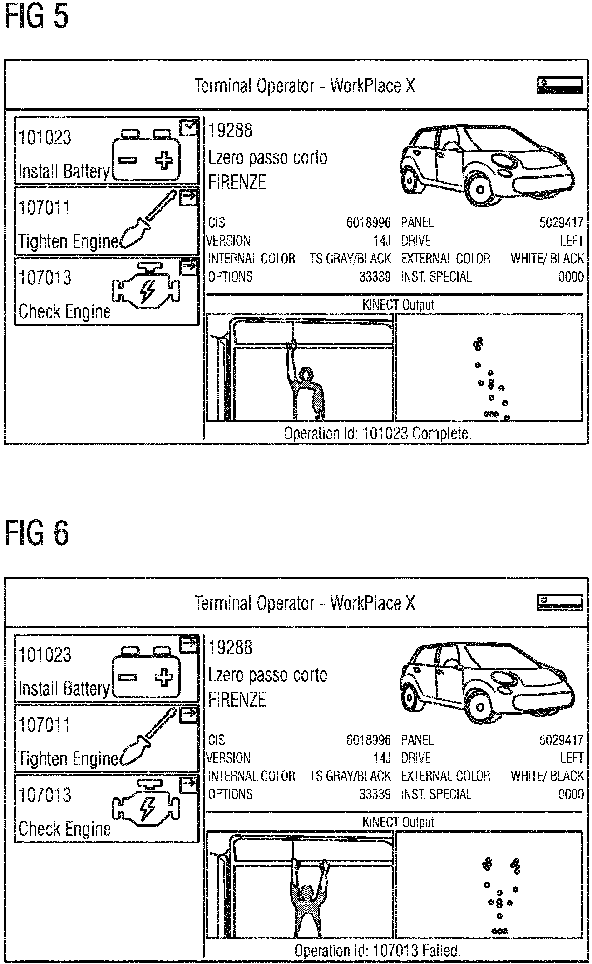

In Fig. 5 the Kinect output shows the operator confirming the successful completed of the first operation by raising the right arm (gesture B). The legend below the Kinect output indicates the successful completion, and the "successful completion" tick also appears in the box of the "install battery" square.

It is assumed that also the second operation is successfully completed, whereby the display will be similar to that of Fig. 5.

Fig. 6 assumes on the contrary that the "check engine" operation has failed, and the Kinect output shows the operator raising both arms (gesture C) to signal this. The "failure" tick appears in the box and the failure is also indicated in the legend below the Kinect output.

In addition to the embodiments of the present invention described above, the skilled persons in the art will be able to arrive at a variety of other arrangements and steps which, even if not explicitly described in this document, nevertheless fall within the scope of the appended claims.

In particular, even if use of Kinect for Windows in the version actually available has been described, any other NUI capable at least of tracking the movements of the human body and recognizing specific gestures can be used. A different NUI system, or a different version of Kinect for Windows, could entail also an association between NUI units and workplaces different from the one-to-one association described here, or could enable tracking the movements of more than one terminal operator in the tracking area of one sensor.

## Claims

1. A method of performing electronic validation of the completion of manual manufacturing tasks (buyoff) in a computer-managed production facility (1), **characterized in that** it comprises:
- providing a natural user interface (4) connected with a management system (2) of the facility (1) and arranged at least to track movements of operators' bodies at workplaces of the facility (1) and to process data of said movements to recognize specific gestures indicating different states of a manufacturing task;
- detecting (11), through the natural user interface (4), the presence of operators in said workplaces;
- identifying an operator entrusted with the buyoff operation for a task through a first predefined gesture performed by said operator, and allotting said operator the natural user control (12);
- at the end of the task (13), communication (14) to the natural user interface, by the operator having the control, of the successful completion or the failure of the task, through a second and respectively a third predefined gesture.

2. The method according to claim 1, comprising the communication of the successful completion or the failure of the task from the natural user interface (4) to the management system (2) of the facility (1).

3. The method according to claim 1 or 2, comprising providing a natural user interface (4) having a plurality of units (4A...4N) each associated with one workplace (3A...3N), and enabling a single operator at a time, at each workplace (3A...3N), to take the control of the associated natural user interface unit (4A...4N).

4. The method according to any preceding claim, wherein each gesture has a predetermined minimum duration.

5. The method according to any preceding claim, wherein said detection step (11) includes assigning an identification code to each detected operator and repeating the code assignment when operator leaves the tracking area and reenters it.

6. The method according to any preceding claim, wherein an operator having the control loses it when leaving the tracking area and is to repeat the first gesture for resuming the control when reentering the tracking area.

7. The method according to any preceding claim, further comprising providing the operator having the control with a feedback of the processing results.

8. A system for performing electronic validation of the completion of manual manufacturing tasks (buyoff) in a computer-managed production facility (1), **characterized in that** it comprises a natural user interface system (4) with at least one unit (4A...4N) comprising sensing means (5A...5N) arranged at least to track movements of operators in workplaces (3A...3N) of the production facility (1), and processing means (6), cooperating with a management system (2) of the production facility (1) and arranged to:
- recognize a first gesture of an operator entrusted with buyoff operation for a manufacturing task to enable such operator to take the control of the or a natural user interface unit (4A...4N), and
- recognize second and third gestures of said operator indicating successful completion or failure, respectively, of task.

9. The system according to claim 8, wherein said natural user interface system (4) is arranged to communicate the successful completion or the failure of the manufacturing tasks to the management system (2).

10. The system according to claim 8 or 9, wherein the natural user interface system (4) comprises a plurality of units (4A...4N) each associated with a workplace (3A...3N), and the sensing unit (5A...5N) of each unit (4A...4N) is arranged to detect the presence of a plurality of operators in the respective workplace (3A...3N) and to recognize the gestures of one operator out of said plurality.

11. The system according to any of claims 8 to 10, wherein the production facility (1, 2) is employing a MES system.
